# EUROPEAN PATENT SPECIFICATION

(11) **EP 1 006 163 B1**
(45) Date of publication and mention of the grant of the patent: **04.02.2004**
(21) Application number: 98204030.5
(22) Date of filing: 30.11.1998
(51) Int. Cl.: C09D 167/00, C08G 63/60, C09D 163/00

(54) **Acid functional polyester resins and lower temperature curable powder coating compositions comprising them**
Säuregruppen enthaltende Polyesterharze und diese enthaltende bei niedrigen Temperaturen härtbare Pulverbeschichtungszusammensetzungen
Résines de polyester contenant des groupes d'acide et des compositions de revêtements pulvérulents les contenant

(43) Date of publication of application: 07.06.2000
(73) Proprietor: Resolution Research Nederland B.V., 3196 KK Vondelingenplaat RT (NL)
(72) Inventor: Bergmans, Ann Elise Germaine Christiane, 1348 Ottignies, Louvain-La-Neuve (BE); De Cock, Christian Jean Charles, 1348 Ottignies, Louvain-La-Neuve (BE); Bertens, Jean-Marc Jacques Eric, 1348 Ottignies, Louvain-La-Neuve (BE); Kooijmans, Petrus Gerardus, 1031 CM Amsterdam (NL); Rans, Marc, Jozef, 1348 Ottignies Louvain-la-Neuve (BE)
(74) Representative: van der Straaten, Jan Anthony

(56) References cited:
- EP-A- 0 136 263
- EP-A- 0 538 931
- EP-A- 0 612 779
- EP-A- 0 634 434
- EP-A- 0 720 997
- WO-A-98/24828
- US-A- 5 811 198

## Description

The present invention relates to carboxyl functional polyester resins, to powder coating compositions comprising them, to cured coating compositions and to a process for their preparation.

More in particular the present invention relates to linear carboxyl functional polyester resins derived from dicarboxylic acids and dialcohols, to powder coating compositions comprising said polyesters and at least one epoxy resin, and which are curable at lower temperatures than the conventional compositions and more in particular at temperatures below 140°C.

Powder coating compositions based on acid functional polyesters and epoxy resins were known from e.g. US patents Nos. 4,094,721, 5,262,510 and US 5,811,198 and the International Patent Application WO 95/25762.

US patent No. 4,094,721 actually discloses linear saturated crystalline polyesters of an acid moiety and a moiety of a dihydric alcohol, at least 40 mol percent of the acid moiety being a terephthalic acid moiety, said polyester containing moieties of 1,4-butanediol and
1,6-hexanediol, the ratio of the 1,4-butanediol moieties to 1,6-hexanediol moieties being 10:90-90:10, said polyester being further characterized by
(a) a glass transition temperature of -10 °C to +30°C;
(b) a melting point in the range of from 40 to 130°C;
(c) a difference between the glass transition temperature and the melting point being equal to or less than 100°C;
(d) a reduced viscosity, measured on a 1 wt% solution in a 60-40 mixture of phenol and 1,1,2,2-tetrachloroethane of 0.5 to 1.5.

According to preferred embodiments, in addition to terephthalic acid moieties of isophthalic acid, azelaic acid, adipic acid, sebacic acid had been included, while the molar ratio of 1,4-butanediol to 1,6-hexanediol is 80:20 to 40:60 and additional dihydric alcohols could be included such as ethylene glycol, propanediol-1,3; pentanediol-1,5 and neopentyl glycol.

US patent No. 5,262,510 discloses a process for preparing polyester resins, which comprised (1) reacting a mixture of organic carboxylic acid monomers, having at least two reactive carboxyl groups with a mixture composed of at least two aliphatic alcohols, having at least two hydroxyl groups to form a prepolymer, and (2) reacting the prepolymer with a mixture composed of pyromellitic dianhydride and adipic acid or azelaic acid to form polyester resins. Said polyester resins could be combined with epoxy resins into powder coating compositions, which could be cured at temperatures of about 160°C in a short time of about 10 minutes, and could overcome the disadvantages of conventional mixed powder coatings, which required a high temperature (180°C) cure.

US 5,811,198 discloses the preparation of outdoor durable powder coating compositions composed of linear tertiary carboxyl functional polyester resins and/or their corresponding linear tertiary glycidyl functional polyester resins. Only constituents for the polyester resins were used, which contained hydrogenated aromatic rings (e.g. hexahydrophtalic acid, anhydride, cyclohexane carboxylic acid, and hydrogenated diphenylolpropane). Said outdoor durable coating properties were clearly recognized not to be reached when the initially prepared polyester resin backbone was derived from constituents containing aromatic unsaturated rings, which were held responsible for deterioration of said outdoor durable coating properties. The cure temperature for the prepared powders are above 180°C.

WO 95/25762 actually discloses semi-crystalline polyglycidylesters obtainable by glycidation of the acid groups of a semi-crystalline acid functional polyester the latter being a reaction product of at least compound(s) A and compound(s) B, wherein compound A is a straight chain aliphatic alpha,omega-dicarboxylic acid having at least 6 carbon atoms, and wherein compound B is a straight chain aliphatic alpha,omega-primary diol having at least 4 carbon atoms, said reaction product having an acid content of from ≥ 1.6 meq/g to ≤ 4.0 meq/g, a number average molecular weight of at least 500, a melting temperature (Tm) by Differential Scanning Calorimetry of ≥ 25°C, an average acid functionality of 2 or more and essentially no reactive groups other than carboxyl groups.

A was preferably adipic-, pimelic-, suberic-, azelaic-, sebacic- or 1,10-decanedicarboxylic acid, while B was 1,4-butanediol, 1,5-pentanediol, 1,6-hexanediol, 1,7-heptanediol, 1,8-octanediol, 1,9-nonanediol, 1,10-decanediol.

However, the coated layers had to be baked at temperatures in the range of from 150 to 225°C.

On the other hand, powder coatings have become during the last decade more and more popular in the coating industry, due to the absence of solvent in the coating formulations.

This absence of solvent will become more and more important, relating to the increasing pressure from environmental and health authorities.

However the conventional powder coating systems for indoor decorative applications have been based up to now on "hybrid" formulations, which consisted of an epoxy resin cured by an acid functional polyester. Typical curing temperatures for said systems are higher than 160°C.

It will be appreciated that there is still a growing need in powder coating formulations, which will be able to cure at temperatures lower than 140°C in combination with other sufficiently attractive physical properties of the powder coating and of the cured coatings derived there from. Such compositions must be very reactive and lead to very short curing times and shall on the other hand show acceptable storage stability under temperatures of 40°C. Moreover, said powder coating compositions will have to be applied and cured on heat sensitive substrates, such as wood and thermoplastic polymers.

In general, the resins formerly used for powder coatings were amorphous and had therefore, a high melting viscosity. Said high melting viscosity restricted the flow of the coatings and degraded the appearance and smoothness of the films. Therefore high curing temperatures were required in order to overcome the aforementioned disadvantages.

Therefore, it is an object of the present invention to provide improved polyester resins, which can be cured at low temperatures and which, when included in powder coating compositions, cannot deteriorate the appearance of the final coating films and other relevant coating properties such as an acceptable storage stability under 40°C.

It is another object of the present invention to provide powder coating compositions containing the above polyester resins in combination with at least one epoxy resin, which can be cured at low temperatures (< 140°C), which can provide attractive coating properties and which shows an acceptable storage stability under 40°C.

It is still another object of the present invention to provide a process for the preparation of said polyester resins.

As a result of extensive research and experimentation said polyester resins aimed at have surprisingly been found.

Accordingly the invention relates to linear carboxylic acid functional polyester resins, obtainable by reaction of:
(a) at least one aromatic and/or cycloaliphatic dicarboxylic acid compound A, comprising two aromatic and/or secondary aliphatic carboxyl groups in the 1,2-position, or anhydride thereof;
(b) at least one hydroxyl monocarboxylic acid B₁, comprising two aliphatic hydroxyl groups, which groups each independently are primary or secondary hydroxyl groups and wherein the carboxylic acid group is a tertiary carboxyl group, mixed with a cycloaliphatic diol B₂, in an amount of at least 5 wt%, relative to the weight of B₁ and B₂ together;
(c) an aliphatic dicarboxylic acid C, comprising an alkylene group having from 3 to 8 carbon atoms and having two terminal aliphatic carboxyl groups; and
(d) an aromatic monocarboxylic acid D selected from benzoic acid, orthotoluic acid and paratoluic acid, the molar ratio of the compounds A: B₁+ B₂:C:D being X:Y+X+ Z₁:Y: Z₂, wherein X ranges from 1 to 8, Y ranges from 2 to 8, Z₁ ranges from -3 to +3 and Z₂ ranges from 1 to 2 until at least 90% of all the hydroxyl groups supplied into the reaction mixture, have been reacted.

It will be appreciated that another aspect of the present invention is formed by a process for the preparation of the hereinbefore specified linear carboxylic acid functional polyester resins.

Accordingly the invention relates to a process for the preparation of linear carboxylic acid functional polyester resins, comprising the reaction of:
(a) at least one aromatic and/or cycloaliphatic dicarboxylic acid compound A, comprising two aromatic and/or secondary aliphatic carboxyl groups in the 1,2-position, or anhydride thereof;
(b) at least one hydroxyl monocarboxylic acid B, comprising two aliphatic hydroxyl groups, which groups each independently are primary or secondary hydroxyl groups and wherein the carboxylic acid group is a tertiary carboxyl group;
(c)an aliphatic dicarboxylic acid C, comprising an alkylene group having from 3 to 8 carbon atoms and having two terminal aliphatic carboxyl groups; and
(d) an aromatic monocarboxylic acid D selected from benzoic acid, orthotoluic acid and paratoluic acid, the molar ratio of the compounds A: B₁+ B₂:C:D being X:Y+X+ Z₁:Y: Z₂, wherein X ranges from 1 to 8, Y ranges from 2 to 8, Z₁ ranges from -3 to 3 and Z₂ ranges from 1 to 2 following a reaction scheme as indicated in claim 7 in paragraphs i), ii) and iii).

This process may consist of a conventional one step process, comprising the charging of the compounds A, B₁, B₂, C and D, simultaneously to the reactor where after the temperature is increased from room temperature to a reaction temperature in the range of from 100 to 200°C and preferably from 170 to 190°C and using a slight vacuum, preferably at a pressure in the range from 800 to 920 mbar absolute, and allowing the reaction to initiate and to proceed under continuous, optionally azeotropic, removal of water, until at least 90% of all the hydroxyl groups as supplied into the reaction mixture, have been reacted.

It will be appreciated that the aliphatic carboxyl functional polyester resins thus produced only contain tertiary carboxyl groups pendant of the main chain.

The molecular weight distribution and number average molecular weight of the produced resin will be dependent on the actual specific reactants A, B₁, B₂, C and D and on the molar ratios applied.

Typical polyester resins of the present invention have acid values in the range of from 2400 to 4235 mmol/kg and preferably from 3000 to 4200 mmol/kg.

As the tertiary aliphatic carboxyl groups present in compound B₁ practically do not react under the normally applied esterification conditions employed, i.e. temperatures of from 100 to 200°C and using a slight vacuo, preferably a pressure between 800 and 920 mbar absolute, they can react later on with the epoxy groups of the epoxy resins as co-ingredient in the curable powder coating compositions.

Generally the optionally azeotropic removal of water is continued until at least 90% of all the hydroxyl groups as supplied into the reaction mixture have reacted and more preferably at least 95% of the supplied hydroxyl groups, have reacted.

An esterification catalyst known in the art of the preparation of polyesters, may be included in the reaction mixture, but is not always required. Examples of esterification catalysts are dibutyltinoxide, paratoluenesulphonic acid, tinoctoate, zincoctoate and lithium ricinoleate.

Depending on the specifically selected reactants A, B₁, B₂, C and D, it may be desired to add a small amount of a solvent e.g. xylene, toluene, which facilitates the water removal, to the specific reaction mixture involved.

Typical examples of compound A are phthalic acid, phthalic anhydride, 1,2-cyclohexane dicarboxylic acid, 1,2-cyclohexane dicarboxylic anhydride, 1,2-hexadiene dicarboxylic anhydride, 1,2-hexadiene dicarboxylic acid, or mixtures thereof. The most preferred compound A is phthalic anhydride.

A typical example of compound B₁ is dimethylol propionic acid.

Typical examples of compound B₂ are hydrogenated diphenylolpropane (HDPP) and hydrogenated diphenylol methane, of which HDPP is preferred.

Typical examples of compound C are glutaric acid, adipic acid, pimelic acid, suberic acid, azelaic acid, sebacic acid, 1,10-decane dicarboxylic acid, 1,4-cyclohexane dicarboxylic acid, of which adipic acid is preferred.

Typical examples of compound D are benzoic acid, orthotoluic acid, paratoluic acid, of which benzoic is most preferred.

It was found that those polyesters according to the present invention, wherein X ranges from 2 to 7 and Y ranges from 2 to 7 and those wherein Z₁ ranges from 0 to 2 and Z₂ ranges from 1 to 2 are preferred.

Preferably the component B₂ is present in an amount of at least 10 wt%, more preferably in an amount of more than 15 wt%, and most preferably in an amount of more than 30 wt% relative to the weight of B₁ and B₂ together.

It has been surprisingly found, that the most preferred powder coating compositions, showing the most attractive combinations of properties of the powder (acceptable storage stability under 40 °C) and those of the final cured coating film, can be obtained by means of a three step process.

Accordingly the invention is also relating to a process for the preparation of linear, carboxylic functional polyester resins, as specified in claim 7 comprising:
(i) the reaction of (a) at least one compound A, as specified hereinbefore, with (b) at least one hereinbefore defined component B₁, whereby the molar amounts of A and B₁ are equal, at a temperature from 100 to 200°C and preferably from 170 to 190°C, under a slight vacuum, preferably at an absolute pressure of from 800 to 920 mbar, during a period of from 2 to 8 hours, thus allowing the reaction to initiate and to proceed under continuous, optionally azeotropic, removal of water,
(ii) addition of amounts of components B₂ and C, as specified hereinbefore and wherein B₂ is a cycloaliphatic diol, and an optional additional amount of B₁, and subsequent increasing of the temperature into the range of from 170 to 190°C and after completion of the condensation reaction, proceeding under continuous optionally azeotropic, removal of water,
(iii) decreasing the temperature to 140°C and addition of component D, as specified hereinbefore, and increasing the temperature into the range from 170 to 190°C, the reaction proceeding under continuous, optionally azeotropic removal of water, until at least 90% of all the hydroxyl groups as supplied into the reaction mixture have been reacted.

It will be appreciated that another aspect of the present invention is formed by powder coating compositions, comprising the hereinbefore specified polyester resins.

Accordingly, the invention also relates to powder coating compositions, comprising at least (i) one hereinbefore specified polyester resin according to the present invention in an amount in the range of from 20 wt% to 45 wt%, and (ii) an epoxyresin having an epoxygroup content (ECG) of from 2000 mmol/kg to 1400 mmol/kg in an amount of 60-80 wt.% wherein all percentages are relative to the weight of the components (i) and (ii).

Depending on the finally desired coating properties, combinations of two or more of the polyester resins may be combined.
(ii)an epoxy resin, having an epoxy group content (EGC) of from 2000 mmol/kg to 1400 mmol/kg in an amount of from 60 to 80 wt%, relative to the weight of the components (i) and (ii) and preferably from 65-70 wt%.

The preferred epoxy resin is a resin based on a polyglycidyl ether of a polyhydric phenol for coatings, which can be produced, for example, by reacting an epihalohydrin with a polyhydric phenol in the presence of an alkali. Examples of suitable polyhydric phenols include: 2,2-bis(4-hydroxyphenyl) propane (bisphenol-A); 2,2-bis(4-hydroxy-3-tert-butylphenyl) propane; 1,1-bis(4-hydroxyphenyl) ethane; 1,1-bis(4-hydroxyphenyl) isobutane; bis(2-hydroxy-1-naphthyl) methane; 1,5-dihydroxynaphthalene; 1,1-bis(4-hydroxy-3-alkylphenyl) ethane and the like. Suitable polyhydric phenols can also be obtained from the reaction of phenol with aldehydes such as formaldehyde (bisphenol-F)or non symetrical ketones. Fusion products of these polyglycidyl ethers of polyhydric phenols with phenolic compounds such as bisphenol-A are also suitable as epoxy resins, such as those described in U.S. Patent Nos. 3,477,990 and 4,734,468. Commercial examples of preferred epoxy resins include, EPIKOTE 3001, 3002, 1001, 1002; EPON 2002; ARALDITE GT 6071, GT 7071, GT 7072; DER 661E, 671, 662, 662E, 692 (EPIKOTE, EPON, ARALDITE and DER are trademarks).

Preferably EPIKOTE 3001 is used, having an epoxy group content of from 2000 to 2200 mmol/kg and a viscosity at 25 °C in a 40% m/m MEK solution of from 6.3 to 7.9 mPa.s.

If desired said powder coating compositions may comprise in addition to the components (i) and (ii) a pigment, fillers, dye, accelerator and additives. A preferred pigment is titanium dioxide. Preferably, the pigment and/or filler is used in a pigment-filler binder weight ratio of from 0 to 0.6.

In general as accelerator can be used phosphonium and/or ammonium salts in a molar ratio from 0.02 to 0.1 of mole accelerator per mole of epoxy groups.

A preferred accelerator is butyl triphenyl phosphonium bromide. Preferably the accelerator is used in a molar ratio of from 0.03 to 0.05 mole of accelerator for 1 mole of epoxy groups.

As fillers can be used e.g. calcium carbonate, barium sulphate, kaolin.

It has been found that these powder coating compositions according to the invention allow very low curing temperatures (< 120°C), which make them very suitably for application of heat sensitive substrates.

In particular these powder coating compositions have shown very good overall properties. They have shown a very attractive appearance: high flow, high whiteness and some degree of gloss (gloss values in the range of from 35 to 90 at 60°C) and preferably high gloss (gloss values from 70 to 90 at 60°C).

The invention is illustrated by the following examples; however without restricting its scope to these specific examples.

### Example 1

### Preparation of the polyester I-a

2.0 Moles of benzoic acid (BA), 2.0 moles of adipic acid (AA), 7 moles of phthalic anhydride (PA), 8.0 moles of dimethylolpropionic acid (DMPA) and 2.0 moles of hydrogenated diphenylol propane (HDPP) are charged into a glass reaction flask equipped with anchor stirrer, thermometer, Dean-Stark water trap and nitrogen inlet. The temperature is increased as fast as possible to 160°C, while stirring. The walls of the reactor are thermally isolated in order to minimize sublimation of both PA and BA. When the reaction water starts to condensate (removal by distillation), the pressure in the reactor may be dropped until 850 mbar. The temperature of the reaction mixture is further raised to 185 °C and maintained until essentially all the hydroxyl functions have reacted. The advancement of the reaction is followed by the water condensate formation (about 75 to 85% of the target should be reached) and by acid group titration (at least 85% acid conversion should be reached). The polyester is then discharged into an aluminium tray and allowed to cool to room temperature.

The polyester I-a was a solid with the following properties:

| | | |
|---|---|---|
| Acid group content | (mmol/kg) | 3488 |
| Acid value | (mgKOH/g) | 196 |
| Melt viscosity at 200 °C | (Poise) | <30 |

Other polyesters have been prepared following the same procedure described above, and can be found in the next table 1.

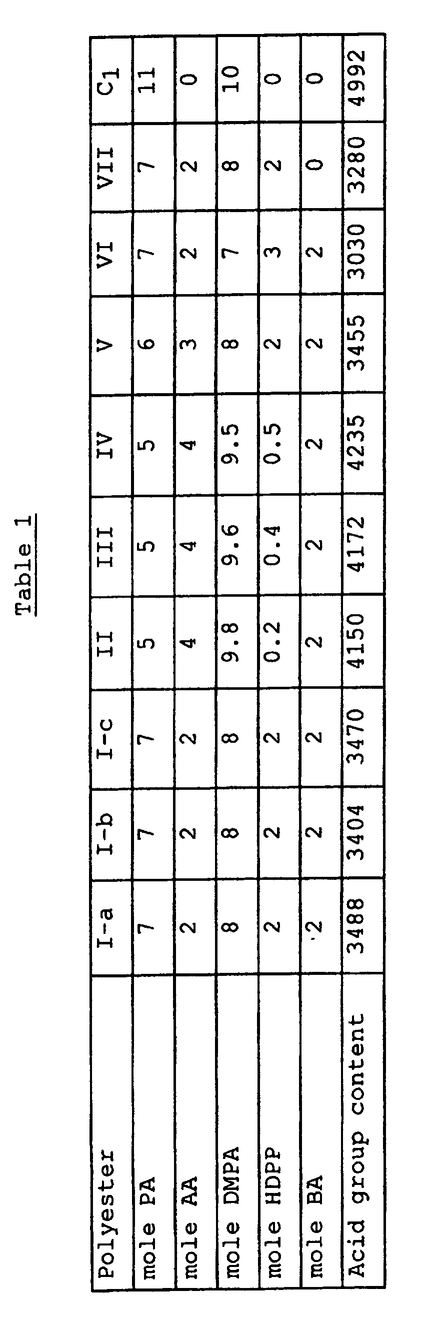

### Example 2

### Preparation of the polyester VIII

7 Moles of phthalic anhydride (PA) and 7.0 moles of dimethylolpropionic acid (DMPA) are charged into a glass reaction flask equipped with anchor stirrer, thermometer, Dean-Stark water trap and nitrogen inlet. The temperature is increased as fast as possible to 170 °C, while stirring. When the reaction water starts to condense (removal by distillation), the pressure in the reactor may be dropped until 850 mbar. After 110 minutes the internal temperature is dropped to 145 °C and when reached 2.0 moles of adipic acid (AA), 2.75 moles of dimethylolpropionic acid (DMPA) and 0.25 moles of hydrogenated diphenylol propane (HDPP) are added into the reactor. The temperature is raised to 170 °C and kept for 50 minutes under reduced pressure. After this period the temperature is reduced to 145 °C and when reached 2.0 moles of benzoic acid (BA) is added. The temperature is raised back to 170 °C and kept for 270 minutes under slight vacuum.

The advancement of the reaction is followed by the water condense formation (about 75 to 85% of the target should be reached) and by acid group titration (at least 85% acid conversion should be reached). The polyester is then discharged into an aluminium tray and allowed to cool to room temperature.

The polyester VIII is a solid with the following properties:

| | | |
|---|---|---|
| Acid group content | (mmol/kg) | 3958 |
| Acid value | (mgKOH/g) | 196 |
| Melt viscosity at 200 °C | (Poise) | <30 |
| T_{g} | (°C) | ± 41 °C |

Other polyesters IX and X have been prepared following the same procedure described above, and can be found in the next table 2.

**Table 2**

| Polyester | VIII | IX | X |
|---|---|---|---|
| mole PA | 7 | 7 | 7 |
| mole AA | 2 | 2 | 2 |
| mole DMPA | 9.75 | 6 | 7 |
| mole HDPP | 0.25 | 4 | 3 |
| mole BA | 2 | 2 | 2 |
| Acid group content | 3958 | 3080 | 3340 |
| Tg, °C | 41 | 46 | 43 |

### Example 3

### Preparation of the powder/powder coating and coating performance

A premix containing 700 g of EPIKOTE 3001 (epoxy group content of 2060 mmol/kg), 413.4 g of polyester I-a (acid group content 3488 mmol/kg), 222.7 g of titanium dioxide, 23.0 g of butyltriphenylphosphonium bromide, 17.1 g of Modaflow Powder III and 8.9 g of benzoin is subsequently extruded in a co-rotating twin screw extruder at a temperature setting not exceeding 65 °C. The extrudate is then cooled, crushed and milled into a fine powder, having an average particle size below 60 microns. The powder is sprayed with an electrostatic spray gun on bare steel panels and cured for 30 minutes at stoving temperatures of 100, 120 and 140 °C. Final appearance properties were obtained for coating thicknesses of 50-60 microns, and were as follows at any cure temperature:
- At a stoving temperature of 100 °C:

| | | |
|---|---|---|
| Gloss at 20° | | 49 |
| Gloss at 60° | | 88 |
| Whiteness index | (ASTM E313) | 85 |
| Flow score | (8=very good - 1=very poor) | 4 |

- At a stoving temperature of 120 °C:

| | | |
|---|---|---|
| Gloss at 20° | | 41 |
| Gloss at 60° | | 84 |
| Whiteness index | (ASTM E313) | 86 |
| Flow score | (8=very good - 1=very poor) | 6 |
| Reverse impact | (inch.lbs) | <20 |
| Direct impact | (inch.lbs) | pass 20 |
| Erichsen slow penetration | (mm) | pass 10 |

- At a stoving temperature of 140 °C:

| | | |
|---|---|---|
| Gloss at 20° | | 34 |
| Gloss at 60° | | 78 |
| Whiteness index | (ASTM E313) | 83 |
| Flow score | (8=very good - 1=very poor) | 7 |
| Reverse impact | (inch.lbs) | <20 |
| Direct impact | (inch.lbs) | pass 20 |
| Erichsen slow penetration | (mm) | pass 10 |

The other polyesters were evaluated in similar powder coating formulations, using a stoichiometric ratio of epoxy groups of the epoxy resin on acid groups of the polyesters. The coating properties obtained with the other polyesters were similar, except for the flow and gloss. The flow of the coating was better when higher quantities of AA were used. As far as the gloss was concerned, it was observed that higher quantities of HDPP could lead to higher gloss values. The following table 3 reports the gloss values obtained at 20 ° and at 60 ° for coatings based on the different polyesters, cured at 120 °C for 30 minutes.

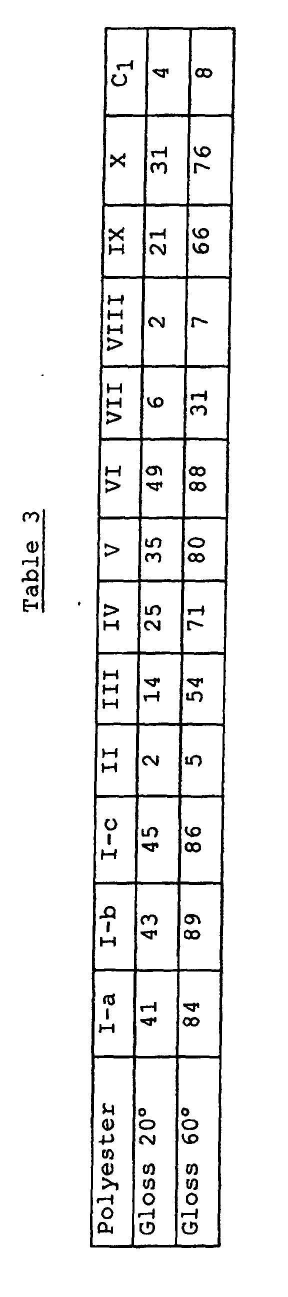

For polyester C₁, no benzoic acid was used and the resulting coating was matt instead of being glossy such as when the polyester I-a is used.

The extrudates were flattened and cooled between chilled rolls and fine milled in the jet grinding mill Alpine AFG at 1790 rpm. Powders were additionally sieved using a 100µ sieve.

All powders were applied on QD bare steel panels (ex Q-panel Company). They are made from standard low-carbon cold-rolled steel and have a bright, smooth finish.

Powders were applied by electrostatic spraying, using Gema equipment.

A flow index ranging from 0 to 8 characterises the flow of the coatings which is visually assessed. An index of 0 represents a bad flow while an index of 8 represents a high flow.

Gloss values were measured according to ASTM D523/DIN 67530, using a Byk-Mallinckrodt multi-gloss 4060 reflectometer. The apparatus was standardised at 20°, 60° and 85° with the appropriate reference panels.

Whiteness values were measured with a Hunterlab Colorquest spectrocolorimeter. The sample was illuminated at 45° and the observation was carried out under an angle of 2° according to the measurement of a whiteness index (ASTM E313).

The impact resistance of coatings was measured according to the ASTM D2794-84 method with an Erichsen variable impact tester, model 304. In this test, a standard weight is dropped from a certain height on a coated test panel. The energy of the impact is determined by the height from which the weight is dropped. The reverse and direct side of the panel are investigated to see whether the coating has failed or not. The investigation is carried out with a ten times magnifying glass. The impact tester is provided with an inch.lbs scale. This unit represents the impact energy and equals the weight multiplied by the height from which the weight is dropped. After the test, the impact on the coated side of the panel is looked at. The coating is said to have passed an impact of x inch.lbs if no damage can be spotted. The highest impact intensity which does not lead to any damage in the coating is recorded.

A slow deformation test was carried out according to the Erichsen slow penetration test. A coated panel was subjected to a gradual deformation (caused by a mechanically driven piston that advances at a constant rate of 0.2 mm.s⁻¹), and the minimum depth (in mm) at which the coating cracked was recorded. For the inspection of the indented coating, a 10 times magnifying glass was used.

The Gitterschnitt (GT) adhesion cross-cut test (ISO 2409-1972/ASTM D3359-1983) was performed. Coatings showing no adhesion loss were assigned a GT value of 0 whereas a 4 was given to poor adhesion results.

## Claims

1. Linear, carboxylic acid functional polyester resins having acid values in the range of from 2400 to 4235 mmol/kg, obtainable by reaction of:
(a) at least one aromatic and/or cycloaliphatic dicarboxylic acid compound A, comprising two aromatic and/or secondary aliphatic carboxyl groups in the 1,2-position, or anhydride thereof;
(b) at least one hydroxyl monocarboxylic acid B₁, comprising two aliphatic hydroxyl groups, which groups each independently are primary or secondary hydroxyl groups and wherein the carboxylic acid group is a tertiary carboxyl group, mixed with a , cycloaliphatic diol B₂ in an amount of at least 5 wt%, relative to the weight of B₁ and B₂ together;
(c) an aliphatic dicarboxylic acid C, comprising an alkylene group having from 3 to 8 carbon atoms and having two terminal aliphatic carboxyl groups; and
(d) an aromatic monocarboxylic acid D selected from benzoic acid, orthotoluic acid and paratoluic acid, the molar ratio of the compounds A:B₁+B₂:C:D being X:Y+X+Z₁:Y:Z₂, wherein X ranges from 1 to 8, Y ranges from 2 to 8, Z₁ ranges from -3 to 3 and Z₂ ranges from 1 to 2, until at least 90% of all the hydroxyl groups supplied into the reaction mixture, have been reacted.

2. Linear carboxylic acid functional polyester resins according to claim 1, **characterized in that** they have acid values in the range of from 3000 to 4200 mmol/kg.

3. Linear carboxylic acid functional polyester resins according to claims 1-2, **characterized in that** X ranges from 2 to 7 and Y ranges from 2 to 7.

4. Linear carboxylic acid functional polyester resins according to claims 1-3, **characterized in that** Z₁ ranges from 0 to 2 and Z₂ ranges from 1 to 2.

5. Linear carboxylic acid functional polyester resins according to claim 1, **characterized in that** component A is phthalic anhydride, component B₁ is dimethylol propionic acid, component B₂ is hydrogenated diphenylol propane, component C is adipic acid, and component D is benzoic acid.

6. Linear carboxylic acid functional polyester resins according to claim 1, wherein the component B₂ is included in an amount of at least 15 wt% relative to the weight of B₁ and B₂ together.

7. A process for the preparation of linear carboxylic acid functional polyester resins, comprising the reaction of:
(a) at least one aromatic and/or cycloaliphatic dicarboxylic acid compound A, comprising two aromatic and/or secondary aliphatic carboxyl groups in the 1,2-position, or anhydride thereof;
(b) at least one hydroxyl monocarboxylic acid B, comprising two aliphatic hydroxyl groups, which groups each independently are primary or secondary hydroxyl groups and wherein the carboxylic acid group is a tertiary carboxyl group;
(c) an aliphatic dicarboxylic acid C, comprising an alkylene group having from 3 to 8 carbon atoms and having two terminal aliphatic carboxyl groups; and
(d) an aromatic monocarboxylic acid D selected from benzoic acid, orthotoluic acid and paratoluic acid; the molar ratio of the compounds A:B₁+B₂:C:D being X:Y+X+Z₁:Y:Z₂, wherein X ranges from 1 to 8, Y ranges from 2 to 8, Z₁ ranges from -3 to 3 and Z₂ ranges from 1 to 2, comprising:
(i) the reaction of (a) at least one compound A, as specified hereinbefore, with (b) at least one hydroxyl monocarboxylic acid B₁, comprising two aliphatic hydroxyl groups, which groups each independently are primary or secondary hydroxyl groups and wherein the carboxylic acid group is a tertiary carboxyl group, , whereby the molar amounts of A and B₁ are equal, at a temperature from 100 to 200 °C and preferably from 170 to 190 °C, under a slight vacuum, preferably at an absolute pressure of from 800 to 920 mbar, during a period of from 2 to 8 hours, thus allowing the reaction to initiate and to proceed under continuous, optionally azeotropic, removal of water,
(ii) addition of amounts of components B₂ and C, as specified hereinbefore and wherein B₂ is a cycloaliphatic diol, and an optional additional amount of B₁, and subsequent increasing of the temperature into the range of from 170 to 190 °C and after completion of the condensation reaction, proceeding under continuous optionally azeotropic, removal of water,
(iii) decreasing the temperature to 140 °C and addition of component D, as specified hereinbefore, and increasing the temperature into the range from 170 to 190 °C, the reaction proceeding under continuous, optionally azeotropic removal of water, until at least 90% of all the hydroxyl groups as supplied into the reaction mixture have been reacted.

8. Powder coating compositions curable at temperatures below 140°C and having an acceptable storage stability under temperatures of 40°C, comprising at least (i) one polyester resin according to claims 1-7, and (ii) an epoxy resin, having an epoxy group content (EGC) of from 2000 mmol/kg to 2200 mmol/kg, in an amount of 60-80 wt.% wherein the component (i) is present in an amount in the range of from 20 to 45 wt%, and all percentages being relative to the weight of the components (i) and (ii).

9. Powder coating compositions according to claim 8, **characterized in that** the epoxy resin (ii) is present in an amount of from 65 to 70 wt%.

10. Powder coating compositions according to claims 8 and 9, **characterized in that** an epoxy resin is used, having an epoxy group content of from 2000 to 2200 mmol/kg and a viscosity at 25 °C in 40% m/m MEK solution in the range of from 6.3 to 7.9 mPa.s.

## Patentansprüche

1. Lineare Carbonsäuregruppen enthaltende Polyesterharze, die Säurezahlen in dem Bereich von 2400 bis 4235 mmol/kg aufweisen, herstellbar durch Umsetzung von:
(a) wenigstens einer aromatischen und/oder cycloaliphatischen Dicarbonsäureverbindung A, die zwei aromatische und/oder sekundäre aliphatische Carboxylgruppen in der 1,2-Position oder ein Anhydrid davon umfasst;
(b) wenigstens einer Hydroxylmonocarbonsäure B₁, die zwei aliphatische Hydroxylgruppen umfasst, wobei die Gruppen jeweils unabhängig voneinander primäre oder sekundäre Hydroxylgruppen sind und worin die Carbonsäuregruppe eine tertiäre Carboxylgruppe ist, gemischt mit einem cycloaliphatischen Diol B₂ in einer Menge von wenigstens 5 Gew.-%, bezogen auf das Gesamtgewicht von B₁ und B₂;
(c) einer aliphatischen Dicarbonsäure C, umfassend eine Alkylengruppe, die 3 bis 8 Kohlenstoffatome aufweist, und zwei terminale aliphatische Carboxylgruppen hat; und
(d) einer aromatischen Monocarbonsäure D, die aus Benzoesäure, ortho-Tolylsäure und para-Tolylsäure ausgewählt ist, wobei das Molverhältnis der Verbindungen A:B₁+B₂:C:D X:Y:X+Z₁:Y:Z₂ ist, worin X im Bereich von 1 bis 8 liegt, Y im Bereich von 2 bis 8 liegt, Z₁ im Bereich von -3 bis 3 liegt und Z₂ im Bereich von 1 bis 2, bis wenigstens 90 % aller Hydroxylgruppen, die der Reaktionsmischung zugeführt worden sind, reagiert haben.

2. Lineare Carbonsäuregruppen enthaltende Polyesterharze gemäß Anspruch 1, **dadurch gekennzeichnet, dass** sie Säurezahlen in dem Bereich von 3000 bis 4200 mmol/kg aufweisen.

3. Lineare Carbonsäuregruppen enthaltende Polyesterharze gemäß den Ansprüchen 1 bis 2, **dadurch gekennzeichnet, dass** X im Bereich von 2 bis 7 liegt und Y im Bereich von 2 bis 7 liegt.

4. Lineare Carbonsäuregruppen enthaltende Polyesterharze gemäß den Ansprüchen 1 bis 3, **dadurch gekennzeichnet, dass** Z₁ im Bereich von 0 bis 2 liegt und Z₂ im Bereich von 1 bis 2 liegt.

5. Lineare Carbonsäuregruppen enthaltende Polyesterharze gemäß Anspruch 1, **dadurch gekennzeichnet, dass** die Komponente A Phthalsäureanhydrid ist, die Komponente B₁ Dimethylolpropionsäure ist, die Komponente B₂ hydriertes Diphenylolpropan ist, die Komponente C Adipinsäure und die Komponente D Benzoesäure ist.

6. Lineare Carbonsäuregruppen enthaltende Polyesterharze gemäß Anspruch 1, worin die Komponente B₂ in einer Menge von wenigstens 15 Gew.-%, bezogen auf das Gesamtgewicht von B₁ und B₂, enthalten ist.

7. Ein Verfahren zur Herstellung von linearen Carbonsäuregruppen enthaltenden Polyesterharzen, umfassend die Umsetzung von:
(a) wenigstens einer aromatischen und/oder cycloaliphatischen Dicarbonsäureverbindung A, die zwei aromatische und/oder sekundäre aliphatische Carboxylgruppen in der 1,2-Position oder ein Anhydrid davon umfasst;
(b) wenigstens einer Hydroxylmonocarbonsäure B, die zwei aliphatische Hydroxylgruppen umfasst, wobei die Gruppen jeweils unabhängig voneinander primäre oder sekundäre Hydroxylgruppen sind und worin die Carbonsäuregruppe eine tertiäre Carboxylgruppe ist;
(c) einer aliphatischen Dicarbonsäure C, umfassend eine Alkylengruppe, die 3 bis 8 Kohlenstoffatome aufweist und zwei terminale aliphatische Carboxylgruppen hat; und
(d) einer aromatischen Monocarbonsäure D, die aus Benzoesäure, ortho-Tolylsäure und para-Tolylsäure ausgewählt ist, wobei das Molverhältnis der Verbindungen A:B₁+B₂:C:D X:Y:X+Z₁:Y:Z₂ ist, worin X im Bereich von 1 bis 8 liegt, Y im Bereich von 2 bis 8 liegt, Z₁ im Bereich von -3 bis 3 liegt und Z₂ im Bereich von 1 bis 2 liegt, umfassend:
(i) die Umsetzung von (a) wenigstens einer Verbindung A, wie vorstehend angegeben, mit (b) wenigstens einer Hydroxylmonocarbonsäure B₁, die zwei aliphatische Hydroxylgruppen umfasst, wobei die Gruppen jeweils unabhängig voneinander primäre oder sekundäre Hydroxylgruppen sind und worin die Carbonsäuregruppe eine tertiäare Carboxylgruppe ist, wobei die molaren Mengen von A und B₁ gleich sind, bei einer Temperatur von 100 bis 200°C und bevorzugt von 170 bis 190°C, unter einem schwachen Vakuum, bevorzugt bei einem absoluten Druck von 800 bis 920 mbar, während einem Zeitraum von 2 bis 8 Stunden, wobei es derart ermöglicht wird, dass die Reaktion initiiert wird und unter kontinuierlichem, gegebenenfalls azeotropem Entfernen von Wasser fortschreitet,
(ii) Zugeben von Mengen der Komponenten B₂ und C, wie vorstehend angegeben, und worin B₂ ein cycloaliphatisches Diol ist, und gegebenenfalls einer zusätzlichen Menge von B₁, und anschließendem Erhöhen der Temperatur auf den Bereich von 170 bis 190°C und nach Beenden der Kondensationsreaktion, Fortfahren unter kontinuierlichem, gegebenenfalls azeotropem Entfernen von Wasser,
(iii) Erniedrigen der Temperatur auf 140°C und Zugabe der Komponente D, wie vorstehend angegeben, und Erhöhen der Temperatur auf den Bereich von 170 bis 190°C, wobei die Umsetzung unter kontinuierlichem, gegebenenfalls azeotropem Entfernen von Wasser fortgeführt wird, bis wenigstens 90 % aller Hydroxylgruppen, die der Reaktionsmischung zugeführt worden sind, reagiert haben.

8. Pulverbeschichtungszusammensetzungen, die bei Temperaturen unter 140°C härtbar sind und eine akzeptable Lagerstabilität unter Temperaturen von 40°C aufweisen, umfassend wenigstens (i) ein Polyesterharz gemäß den Ansprüchen 1 bis 7, und (ii) ein Epoxyharz, das einen Epoxygruppengehalt (EGC) von 2000 mmol/kg bis 2200 mmol/kg aufweist, in einer Mengen von 60 bis 80 Gew.-%, worin die Komponente (i) in einer Menge in dem Bereich von 20 bis 45 Gew.-% vorliegt, und alle Prozentsätze auf das Gewicht der Komponenten (i) und (ii) bezogen sind.

9. Pulverbeschichtungszusammensetzungen gemäß Anspruch 8, **dadurch gekennzeichnet, dass** das Epoxyharz (ii) in einer Menge von 65 bis 70 Gew.-% vorliegt.

10. Pulverbeschichtungszusammensetzungen gemäß den Ansprüchen 8 und 9, **dadurch gekennzeichnet, dass** ein Epoxyharz verwendet wird, das einen Epoxygruppengehalt von 2000 bis 2200 mmol/kg und eine Viskosität bei 25°C in 40 % m/m MEK-Lösung im Bereich von 6,3 bis 7,9 mPa.s. aufweist.

## Revendications

1. Résines linéaires de polyester fonctionnel contenant des groupes acide carboxylique ayant des indices d'acide dans la gamme allant de 2400 à 4235 mmol/kg, pouvant être obtenues par réaction de :
(a) au moins un composé A d'acide dicarboxylique aromatique et/ou cycloaliphatique, comprenant deux groupes carboxyle aromatiques et/ou aliphatiques secondaires en position 1,2 ou leurs anhydrides ;
(b) au moins un acide monocarboxylique hydroxylé B₁, comprenant deux groupes hydroxyle aliphatiques, lesquels groupes sont chacun indépendamment des groupes hydroxyle primaires ou secondaires et le groupe acide carboxylique étant un groupe carboxyle tertiaire, mélangé avec un diol cycloaliphatique B₂ en une quantité d'au moins 5 % en poids, par rapport au poids de B₁ et B₂ ensemble ;
(c) un acide dicarboxylique aliphatique C, comprenant un groupe alkylène ayant de 3 à 8 atomes de carbone et ayant deux groupes carboxyle aliphatiques terminaux ; et
(d) un acide monocarboxylique aromatique D choisi parmi l'acide benzoique, l'acide orthotoluique et l'acide paratoluique, le rapport molaire des composés A:B₁+B₂:C:D étant X:Y+X+Z₁:Y:Z₂, dans lequel X est compris dans la gamme de 1 à 8, Y est compris dans la gamme de 2 à 8, Z₁ est compris dans la gamme de -3 à 3 et Z₂ est compris dans la gamme de 1 à 2, jusqu'à ce qu'au moins 90 % de l'ensemble des groupes hydroxyle introduits dans le mélange réactionnel aient réagi.

2. Résines linéaires de polyester fonctionnel contenant des groupes acide carboxylique selon la revendication 1, **caractérisées en ce qu'**elles ont des indices d'acide dans la gamme comprise entre 3000 et 4200 mmol/kg.

3. Résines linéaires de polyester fonctionnel contenant des groupes acide carboxylique selon les revendications 1 et 2, **caractérisées en ce que** X est compris dans la gamme de 2 à 7 et Y est compris dans la gamme de 2 à 7.

4. Résines linéaires de polyester fonctionnel contenant des groupes acide carboxylique selon les revendications 1 à 3, **caractérisées en ce que** Z₁ est compris dans la gamme de 0 à 2 et Z₂ est compris dans la gamme de 1 à 2.

5. Résines linéaires de polyester fonctionnel contenant des groupes acide carboxylique selon la revendication 1, **caractérisées en ce que** le composant A est l'anhydride phtalique, le composant B₁ est l'acide diméthylol-propionique, le composant B₂ est le diphénylolpropane hydrogéné, le composant C est l'acide adipique, et le composant D est l'acide benzoïque.

6. Résines linéaires de polyester fonctionnel contenant des groupes acide carboxylique selon la revendication 1, dans lesquelles le composant B₂ est inclus en une quantité d'au moins 15 % en poids par rapport au poids de B₁ et B₂ ensemble.

7. Procédé de préparation de résines linéaires de polyester fonctionnel contenant des groupes acide carboxylique, comprenant la réaction de :
(a) au moins un composé A d'acide dicarboxylique aromatique et/ou cycloaliphatique, comprenant deux groupes carboxyle aromatiques et/ou aliphatiques secondaires en position 1,2 ou leurs anhydrides ;
(b) au moins un acide monocarboxylique hydroxylé B₁, comprenant deux groupes hydroxyle aliphatiques, lesquels groupes sont chacun indépendamment des groupes hydroxyle primaires ou secondaires et le groupe acide carboxylique étant un groupe carboxyle tertiaire ;
(c) un acide dicarboxylique aliphatique C, comprenant un groupe alkylène ayant de 3 à 8 atomes de carbone et ayant deux groupes carboxy aliphatiques terminaux ; et
(d) un acide monocarboxylique aromatique D choisi parmi l'acide benzoique, l'acide orthotoluique et l'acide paratoluique, le rapport molaire des composés A:B₁+B₂:C:D étant X:Y+X+Z₁:Y:Z₂, dans lequel X est compris dans la gamme de 1 à 8, Y est compris dans la gamme de 2 à 8, Z₁ est compris dans la gamme de -3 à 3 et Z₂ est compris dans la gamme de 1 à 2, comprenant :
(i) la réaction de (a) au moins un composé A, tel que spécifié précédemment, avec (b) au moins un acide monocarboxylique hydroxylé B₁, comprenant deux groupes hydroxyle aliphatiques, lesquels groupes sont chacun indépendam-ment des groupes hydroxy primaires ou secondaires et le groupe acide carboxylique étant un groupe carboxyle tertiaire ;
dans lequel les quantités molaires de A et B sont égales, à une température comprise entre 100 et 200 °C et de préférence entre 170 et 190 °C, sous un léger vide, de préférence à une pression absolue comprise entre 800 et 920 mbar, pendant une période de 2 à 8 heures, permettant ainsi l'amorçage de la réaction et le fonctionnement en éliminant l'eau en continu, éventuellement par entraînement azéotropique,
(ii) l'addition de quantités de composants B₂ et C, tels que spécifiés précédemment et B₂ étant un diol cycloaliphatique, et une quantité éventuellement additionnelle de B₁, et une augmentation suivante de la température dans la gamme comprise entre 170 et 190 °C et après la fin de la réaction de condensation, le fonctionnement en éliminant l'eau en continu, éventuellement par entraînement azéotropique,
(iii) la diminution de la température à 140 °C et l'addition du composant D, tel que spécifié précédemment, et l'augmentation de la température dans la gamme comprise entre 170 et 190 °C, la réaction ayant lieu en éliminant l'eau en continu, éventuellement par entraînement azéotropique, jusqu'à ce qu'au moins 90 % de tous les groupes hydroxyle introduits dans le mélange réactionnel aient réagi.

8. Compositions de revêtement en poudre durcissables à des températures inférieures à 140 °C et ayant une stabilité de stockage acceptable à des températures de 40 °C, comprenant au moins (i) une résine de polyester selon les revendications 1 à 7, et (ii) une résine époxy, ayant une teneur en groupes époxy (EGC, epoxy group content) allant de 2000 mmol/kg à 2200 mmol/kg, en une quantité de 60-80 % en poids dans lesquelles le composant (i) est présent en une quantité dans la gamme comprise entre 20 et 45 % en poids, et tous les pourcentages étant relatifs au poids des composants (i) et (ii).

9. Compositions de revêtement en poudre selon la revendication 8, **caractérisées en ce que** la résine époxy (ii) est présente en une quantité comprise entre 65 et 70 % en poids.

10. Compositions de revêtement en poudre selon les revendications 8 et 9, **caractérisées en ce qu'**on utilise une résine époxy, ayant une teneur en groupes époxy comprise entre 2000 et 2200 mmol/kg et une viscosité à 25 °C dans une solution MEK à 40 % m/m dans la gamme comprise entre 6,3 et 7,9 mPa.s.
